# EUROPEAN PATENT SPECIFICATION

(11) **EP 4 270 825 B1**
(45) Date of publication and mention of the grant of the patent: **29.01.2025**
(21) Application number: 22169651.1
(22) Date of filing: 25.04.2022
(51) Int. Cl.: H04J 3/14, H04J 3/06

(54) **METHOD AND DEVICE FOR TIME VALIDATION IN A VEHICLE**
VERFAHREN UND VORRICHTUNG ZUR ZEITVALIDIERUNG IN EINEM FAHRZEUG
PROCÉDÉ ET DISPOSITIF DE VALIDATION TEMPORELLE DANS UN VÉHICULE

(43) Date of publication of application: 01.11.2023
(73) Proprietor: Bayerische Motoren Werke Aktiengesellschaft, 80809 München (DE)
(72) Inventor: Abdelhameed, Mohamed-Saad, 85221 Dachau (DE)

(56) References cited:
- WO-A1-2021/226394
- CN-A- 106 130 681
- US-A1- 2015 222 378

## Description

The present disclosure is directed to a method for time validation in a vehicle, to a data processing system comprising means for carrying out the method, a computer program comprising instructions which, when the program is executed by a computer, cause the computer to carry out the method, and a computer-readable medium comprising instructions which, when executed by a computer, cause the computer to carry out the method.

With an increasing complexity of autonomous or automated vehicles, multiple communication busses are used by different electronic control units (ECUs) to ensure that autonomous or automated driving functions fulfill safety requirements, e.g. requirements needed to fulfill a so called Automotive Safety Integrity Level (ASIL).

The Automotive Safety Integrity Level is a risk classification scheme defined by ISO 26262 - Functional Safety for Road Vehicles. The ASIL classification comprises four safety levels, starting from ASIL A with the lowest safety requirements to ASIL D having the highest safety requirements. Furthermore, hazards that are identified as QM do not dictate any safety requirements.

All related controllers which take part in critical decision making of automated driving functions need to have a synchronized time according to the other controllers. Time synchronization for highly automated vehicles, e.g. a car of a SAE Level 3 or Level 4 or higher (wherein the SAE J3016 standard describes classification and definition of terms for road-bound vehicles with automated driving systems), need to fulfill ASIL B or higher.

In the state of the art, time synchronization of for example an Ethernet bus is done according to IEEE 802.1AS for a TSN (time sensitive network) and IEEE 1588 with respect to the PTP (Precision Time Protocol). However, for time synchronization via PTP there are several measures that can be taken in addition to the respective standards, so that the integrity of the synchronization process and thus the integrity of the distributed time-base can be ensured.

More specifically, a vehicle may comprise different environment sensors which are configured to provide sensor data with regards to the environment of the vehicle. A control unit within the vehicle may make use of and/or may fuse the sensor data from the different environment sensors to determine an environment model which indicates the position of objects within the environment of the vehicle. The vehicle may then be operated, e.g. within an autonomous driving mode, based on the environment model. The environment sensors may be located in one or more different communications networks or communications bus systems of the vehicle. Example communication bus systems are a Controller Area Network (CAN), notable a CAN-FD (Flexible Data-Rate), bus system, a FlexRay bus system, a Local Interconnect Network (LIN) bus system, a Media Oriented Systems Transport (MOST) bus system and/or an Ethernet bus system.

The different environment sensors typically each comprise a local time clock which is configured to provide a time stamp for the sensor data which is captured by the respective environment sensor. The time stamps of the sensor data which is provided by the different sensors are typically taken into account when fusing the sensor data to determine the environment model.

Differences in the local times which are indicated by the local time clocks of the different environment sensors may lead to inaccuracies of the environment model and may impair autonomous driving.

In this respect, WO2021204342A1 discloses a method for performing time-synchronization between a master clock of a master unit and a plurality of slave clocks of a corresponding plurality of slave units within a communication bus system. The method comprises sending a forward time-synchronization message indicative of the master clock from the master unit to the plurality of slave units, in order to enable the plurality of slave units to time-synchronize their respective slave clocks with the master clock. The method further comprises receiving a reverse time-synchronization message indicative of the respective slave clock from each of the plurality of slave units at a first validator. In addition, the method comprises time-synchronizing a plurality of validator clocks of the first validator to the corresponding plurality of slave clocks using the reverse time-synchronization messages from the plurality of slave units, and validating the time-synchronization between the plurality of slave clocks at the first validator based on the plurality of validator clocks of the first validator.

Another method for time synchronization is disclosed by the document WO2021/226394, Qualcomm, published on 11 November 2021.

Moreover, also GNSS (global navigation satellite system) positioning information are essential for autonomous driving and its time stamping is also part of the above-described safety goal in order to be able to know the time and the location of the vehicle and use this data later on in the sensor fusion ECU and/or to detect a location of the vehicle on a map. To ensure time stamping with ASIL, the state of the art is relaying on ASIL-B receiver (chips) for the GNSS positioning information. This limits the option of receiver (chips) that may be used in automated vehicles. It is for example not possible to relay on QM receivers and a QM receiver ECU for GNSS positioning information.

Against the background of this prior art, one object of the present disclosure is, inter alia, to provide a device and a method which are suitable for overcoming at least some of the above-mentioned disadvantages of the prior art, respectively.

The object is solved by the features of the independent claims. The dependent claims contain preferred further developments of the disclosure.

More specifically, the object is solved by a method for time validation in a vehicle.

The method may be a computer-implemented method. The method may also be called a method for timestamp validation provided to position information by a data processing unit installed in a vehicle.

The method comprises receiving a first position information at a receiving unit of the vehicle, the received first position information comprises a first time information.

The method comprises providing a first timestamp to the received first position information based on a vehicle time at the time of receiving the first position information.

The method comprises receiving a second position information at a receiving unit of the vehicle, the received second position information comprises a second time information.

The method comprises providing a second timestamp to the received second position information based on the vehicle time at the time of receiving the second position information.

The method comprises determining if a difference between the first and the second time information and a difference between the first and the second timestamp are the same and/or if a deviation between the two differences is below a predefined threshold.

The position information may be received from a satellite navigation or satnav system which is a system that uses satellites to provide autonomous geo-spatial positioning. It allows small electronic receivers to determine their location (longitude, latitude, and/or altitude/elevation) to high precision (e.g., within a few centimetres to metres) using time signals transmitted along a line of sight by radio from satellites. The system can be used for providing position, navigation or for tracking the position of something fitted with a receiver (satellite tracking). The signals also allow the electronic receiver to calculate the current local time to high precision, which allows time synchronization. These uses are collectively known as Positioning, Navigation and Timing (PNT). Satnav systems operate independently of any telephonic or internet reception, though these technologies can enhance the usefulness of the positioning information generated.

A satellite navigation system with global coverage may be termed a global navigation satellite system (GNSS).

The position information may be provided by such a GNSS and may also be called GNSS (position) information. A global navigation satellite system, or GNSS, is a system for determining position and navigation on earth and in the air by receiving signals from navigation satellites and pseudolites. GNSS is a collective term for the use of existing and future global satellite systems such as: NAVSTAR GPS (Global Positioning System) of the United States of America, GLONASS (Global Navigation Satellite System) of the Russian Federation, Galileo of the European Union, and Beidou of the People's Republic of China and various supplementary systems of Europe, the USA, Japan and India.

As described above, the respective positioning information may allow the vehicle to determine its location, e.g. based on a respective time information included in the position information. For example a GPS receiver calculates its own four-dimensional position in spacetime based on data received from multiple GPS satellites. Each satellite carries an accurate record of its position and time, and transmits that data as position information to the receiver. The satellites carry very stable atomic clocks that are synchronized with one another and with ground clocks. Any drift from time maintained on the ground is corrected daily. In the same manner, the satellite locations are known with great precision. The GPS receivers have clocks as well, which use the vehicle, e.g., a global time used by some or all of the communication networks of the vehicle. Since the speed of radio waves is constant and independent of the satellite speed, the time delay between when the satellite transmits a signal and the receiver receives it is proportional to the distance from the satellite to the receiver. At a minimum, four satellites must be in view of the receiver for it to compute four unknown quantities (three position coordinates and the deviation of its own clock from satellite time). However, the time information included in the GPS signal may not only be used to calculate the position coordinates but may also be used to calculate a time difference between two subsequently received GPS signals. When both GPS signals a timestamp at the time of the receiving the GPS signals, a time difference between the two timestamps should be substantially the same, i.e. should be ideally the same but may slightly deviate from the time difference calculated based on the time included in the GPS signals. By checking if the time differences are substantially the same, it may be ensured that no time corruption of the local time used at the receiver unit occurred between receiving the two GPS signals. Therefore, safety integrity may be ensured even if the receiver itself does not provide safety integrity. The description given above applies mutatis mutandis to all other satellite navigation systems and is thus not limited to GPS which was solely used for exemplary purposes.

In the following, optional further developments of the disclosure are described in detail.

The receiving unit may provide the first timestamp to the received first position information and/or the second timestamp to the received second position information. That is, the timestamping may be done by the receiving unit, optionally, at the time of receiving the position information. The timestamps may include an actual time of a local clock of the receiving unit.

The receiving unit may be connected to a control unit of the vehicle. The method may further comprise sending the first and the second time information and the first and the second timestamp from the receiving unit to the control unit, and determining if the difference between the first and the second time information and the difference between the first and the second timestamp are the same and/or if the deviation between the two differences is below the predefined threshold at the control unit.

That is, when the timestamping was done by the receiving unit, the timestamps may be sent from the receiving unit to the control unit, optionally along with the positioning information, and the control unit may compute the time differences and do the comparing of the computed time differences. This also allows the control unit to act as a central validator for timestamps provided by different sub receiving units, i.e., the receiving unit may comprise a plurality of receiving units for receiving positioning information from different positioning system, e.g., satellite navigation systems. For example, one of the sub receiving units may be provided for GPS and another one of the sub receiving units may be provided for Galileo. The two sub receiving units may provide a timestamp to the position information received from the respective positioning system. The control unit may then carry out time validation between the respective sub receiving units.

That is, the method may comprise receiving a first position information at a first receiving unit of the vehicle, the received first position information comprises a first time information. The method may comprise providing a first timestamp to the received first position information based on a vehicle time at the time of receiving the first position information. Optionally, the first timestamp is provided by the first receiving unit. The method may comprise receiving a second position information at a second receiving unit of the vehicle, the received second position information comprises a second time information. The method may comprise providing a second timestamp to the received second position information based on the vehicle time at the time of receiving the second position information. Optionally, the second timestamp is provided by the second receiving unit. The method may comprise determining if a difference between the first and the second time information and a difference between the first and the second timestamp are the same and/or if a deviation between the two differences is below a predefined threshold. The first time information may be received from a first positioning system. The second time information may be received from a second positioning system. The first positioning system may be different from the second positioning system. The method may further comprise sending the first and the second time information and the first and the second timestamp from the first and the second receiving unit to the control unit, and determining if the difference between the first and the second time information and the difference between the first and the second timestamp are the same and/or if the deviation between the two differences is below the predefined threshold at the control unit.

The control unit may have a higher automotive safety level than the receiving unit. That is, the receiving unit may be QM whereas the control unit is ASIL B. As already explained above, the automotive safety integrity level (ASIL) is a risk classification scheme defined by the above-mentioned ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements. There are four ASILs identified by the standard: ASIL A, ASIL B, ASIL C, ASIL D. ASIL D dictates the highest integrity requirements on the product and ASIL A the lowest. Hazards that are identified as QM (see below) do not dictate any safety requirements.

The method may comprise synchronizing a local time of the receiving unit to the vehicle time. For example, PTP may be used to synchronize the receiving unit to a global or master time, i.e., the vehicle time, used by a grandmaster. The receiving unit is acting as a slave to be synchronize to the grandmaster time. If more than one receiving unit is used, every receiving unit may be synchronized to the vehicle time.

The receiving unit may provide the first timestamp to the received first position information and/or the second timestamp to the received second position information based on its synchronized local time, i.e. based on its time synchronized to global/vehicle time.

The first position information may be received from a first global navigation satellite system and the second position information is received from a second global navigation satellite system, wherein the first and the second global navigation satellite system are different from each other.

The first and the second position information may be received from one global navigation satellite system.

The vehicle may be an automated vehicle. The vehicle may be an automobile, e.g., a car. The automated vehicle can be configured to take over lateral and/or longitudinal guidance of the automated vehicle at least partially and/or temporarily during automated driving. To do so, inter alia the position information validated with the above-described method may be used.

The automated driving may be such that the driving of the vehicle is (largely) autonomous.

The vehicle may be a vehicle of autonomy level 1, i.e., the driver takes over the dynamic driving task, even if supporting systems (e.g., anti-lock braking system (ABS) and/or electronic stability control ESP) are available.

The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The vehicle autonomously performs functions such as triggering the turn signal, changing lanes, and/or lane keeping. The driver can attend to other matters, but is prompted by the system to take over control within a warning time if needed.

The vehicle may be an autonomy level 4 vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

The method may comprise controlling an automated driving function of the vehicle based on the received first and/or second position information only when the difference between the first and the second time information and the difference between the first and the second timestamp are the same and/or if the deviation between the two differences is below the predefined threshold.

Furthermore, a data processing system comprising means for carrying out the above-described method may be provided. The data processing system may be part of the above-described vehicle. It is also possible that a vehicle comprising the data processing system is provided.

The data processing system may comprise an electronic control unit (ECU), also known as an electronic control module (ECM), which is an embedded system in automotive electronics that controls one or more of the electrical systems or subsystems in a car or other motor vehicle. Modern vehicles have many ECUs, and these can include some or all of the following: engine control module (ECM), powertrain control module (PCM), transmission control module (TCM), brake control module (BCM or EBCM), central control module (CCM), central timing module (CTM), general electronic module (GEM), body control module (BCM), and suspension control module (SCM). These ECUs together are sometimes referred to collectively as the car's computer though technically they are all separate computers, not a single one. Sometimes an assembly incorporates several individual control modules (a PCM often controls both the engine and the transmission). The ECU comprising the first microcontroller may be configured to control functions relevant to a driving behavior of the vehicle, such as an engine control system, a power transmission, a braking system and/or a tire pressure control system. Additionally or alternatively, one, some or all driver assistance systems of the automated vehicle such as parking assistant, adaptive cruise control, lane departure warning, lane change assistant, traffic sign recognition, light signal recognition, approach assistant, night vision assistant, intersection assistant, and/or many others may be controlled by the ECU. The ECU may be or may be part of an (intelligent) processor-controlled unit that can, optionally, communicate with other modules, optionally via a central gateway (CGW). The ECU can form part of the vehicle's onboard network comprising fieldbuses such as CAN bus, LIN bus, MOST bus and/or FlexRay or automotive Ethernet, optionally together with a telematics control unit.

Moreover, the description given above with respect to the method applies mutatis mutandis to the data processing system vehicle and vice versa.

Furthermore, a computer program comprising instructions which, when the program is executed by a computer, cause the computer to carry out the above-described method may be provided.

The program may comprise any program code, in particular a code suitable for control systems of vehicles. The description given above with respect to the method, the data processing system and the vehicle applies mutatis mutandis to the computer program and vice versa.

Furthermore, a computer-readable medium comprising instructions which, when executed by a computer, cause the computer to carry out the above described method, may be provided.

The computer-readable medium may be any digital data storage device, such as an USB flash drive, a hard disk, a CD-ROM, a SD card, or a SSD card. The above-described computer program may be stored on the computer-readable medium. However, the computer program does not necessarily have to be stored on such a computer-readable medium but can also be obtained via the Internet.

Moreover, the description given above with respect to the method and the data processing system applies mutatis mutandis to the computer program and the computer-readable medium, and vice versa.

The above-described method may be summarized in other words and with respect to a more concrete implementation thereof as follows, wherein the following description is not intended to limit the disclosure in any way: The current state of the art is relaying on ASIL-B receiver chips. However, few available options of ASIL B receiver chips also limit the options for GNSS receiver ECUs. Basic principle of the disclosure is to relay on QM receivers and QM receiver ECUs for GNSS and at the consumer side create safety integrity by performing a plausibility check for time stamping of the GNSS data compared to the world global time received from (optionally) different GNSS systems (and optionally different satellites of each system). More specifically, a GNSS QM ECU may contain several GNSS receivers for different systems. The GNSS data contains world time as well as the positioning information from several satellites of the GNSS. The GNSS receiver ECU micro controller unit (MCU) will get the vehicle global time synchronization by the standard PTP protocol in the vehicle with QM safety integrity. GNSS row data is time stamped with the global vehicle time immediately upon reception. The time stamped GNSS data is sent to higher level positioning ECU, i.e., the GNSS consumer, for further processing with higher safety integrity. The method comprises checking the consistency of flow of time between different satellite system and vehicle time stamps provided by GNSS receiver.

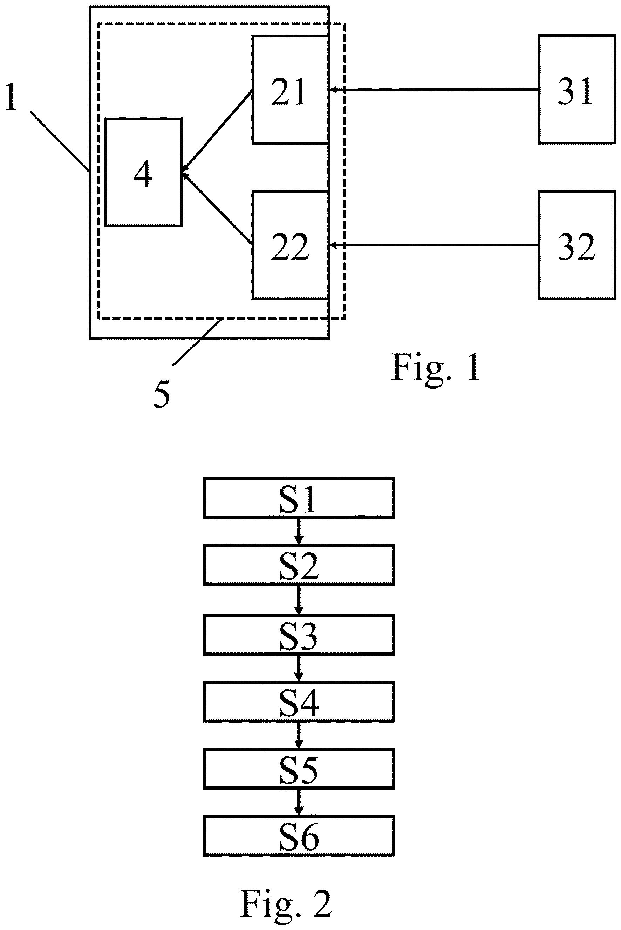

An embodiment is described with reference to figures 1 and 2 below.
- Fig. 1: shows schematically an automated vehicle comprising a control unit configured to carry out a method for time validation, and
- Fig. 2: shows schematically a flowchart of the method.

The automated vehicle 1 schematically shown in figure 1 comprises two receiving units 21, 22 for receiving position information from two positioning systems 31, 32, and a control unit 4 connected to the two receiving units 21, 22, respectively. The control unit 4 has a higher automotive safety level than the receiving units 21, 22.

The receiving units 21, 22 and the control unit 4 form (part of) a data processing system 5 which is configured to carrying out the method for time validation, the method comprising, as can be gathered from the flowchart in figure 2, substantially six steps S1 - S6.

In a first step S1 of the method, a respective local time of the two receiving units 21, 22 is synchronized to a vehicle time, e.g., using PTP.

In a second step S2 of the method, a first position information is sent from a first one of the positioning systems 31 and is received at a first one of the receiving units 21, the received first position information comprises a first time information wt1. In the first step S1 of the method, a second position information is sent from a second one of the positioning systems 32 and is received at a second one of the receiving units 22, the received second position information comprises a second time information wt2.

The first one of the positioning systems 31 is a first global navigation satellite system, e.g., GPS, and the second one of the positioning systems 32 is a second global navigation satellite system, e.g., Beidou. Therefore, the first position information is received from the first global navigation satellite system and the second position information is received from a second global navigation satellite system, wherein the first and the second global navigation satellite system are different from each other. Alternatively, the first and the second position information may be received from one or the same global navigation satellite system, i.e., the first one of the positioning systems 31 may send the first and the second position information to the first and/or the second one of the receiving units 31, 32.

In a third step S3 of the method, a first timestamp ts1 is provided to the received first position information based on the vehicle time (i.e., synchronized local time of the first one of the receiving units 31) at the time of receiving the first position information by the first one of the receiving units 31, and a second timestamp ts2 is provided to the received second position information based on the vehicle time (i.e., synchronized local time of the first one of the receiving units 32) at the time of receiving the second position information by the second one of the receiving units 32.

In a fourth step S4 of the method, the first one of the receiving units 31 sends the first time information wt1 and the first timestamp ts1 to the control unit 4, and the second one of the receiving units 32 sends the second time information wt2 and the first timestamp ts2 to the control unit 4.

In a fifth step S5 of the method, the control unit 4 determines if the difference between the first and the second time information wt1, wt2 and the difference between the first and the second timestamp ts1, ts2 are the same and/or if the deviation between the two differences is below the predefined threshold. This may be calculated as follows: wt2 - wt1 = ts2 - ts1 or (wt2 - wt1) - (ts2 - ts1) < threshold or (wt2 - wt1) - (ts2 - ts1) =< threshold.

In a sixth step S6 of the method, the control unit 4 controls, directly or indirectly, an automated driving function of the vehicle 1 based on the received first and/or second position information only when the difference between the first and the second time information wt1, wt2 and the difference between the first and the second timestamp ts1, ts2 are the same and/or if the deviation between the two differences is below the predefined threshold.

### Reference signs

- 1: automated vehicle
- 21, 22: receiving unit
- 31, 32: positioning systems
- 4: control unit
- 5: data processing system
- S1 - S6: steps of the method

## Claims

1. Method for time validation in a vehicle (1), the method comprising:
- receiving a first position information at a receiving unit (21, 22) of the vehicle (1), the received first position information comprises a first time information,
- providing a first timestamp to the received first position information based on a vehicle time at the time of receiving the first position information,
- receiving a second position information at the receiving unit (21, 22) of the vehicle (1), the received second position information comprises a second time information,
- providing a second timestamp to the received second position information based on the vehicle time at the time of receiving the second position information, the method **characterized by**:
- determining if a difference between the first and the second time information and a difference between the first and the second timestamp are the same and/or if a deviation between the two differences is below a predefined threshold.

2. Method according to claim 1, wherein the receiving unit (21, 22) provides the first timestamp to the received first position information and/or the second timestamp to the received second position information.

3. Method according to claim 1 or 2, wherein the receiving unit (21, 22) is connected to a control unit (4) of the vehicle (1), wherein the method further comprises:
- sending the first and the second time information and the first and the second timestamp from the receiving unit (21, 22) to the control unit (4), and
- determining if the difference between the first and the second time information and the difference between the first and the second timestamp are the same and/or if the deviation between the two differences is below the predefined threshold at the control unit (4).

4. Method according to claim 3, wherein the control unit (4) has a higher automotive safety level than the receiving unit (21, 22).

5. Method according to any of claims 1 to 4, wherein the method further comprises synchronizing a local time of the receiving unit (21, 22) to the vehicle time.

6. Method according to claim 5, when being dependent on any of claims 2 to 4, wherein the receiving unit (21, 22) provides the first timestamp to the received first position information and/or the second timestamp to the received second position information based on its synchronized local time.

7. Method according to any of claims 1 to 6, wherein the first position information is received from a first global navigation satellite system (31) and the second position information is received from a second global navigation satellite system (32), wherein the first and the second global navigation satellite system (31, 32) are different from each other.

8. Method according to any of claims 1 to 6, wherein the first and the second position information are received from one global navigation satellite system (31, 32).

9. Method according to any of claims 1 to 8, wherein the vehicle (1) is an automated vehicle and wherein the method further comprises controlling an automated driving function of the vehicle (1) based on the received first and/or second position information only when the difference between the first and the second time information and the difference between the first and the second timestamp are the same and/or if the deviation between the two differences is below the predefined threshold.

10. A data processing system (5) comprising means for carrying out the method according to any of claims 1 to 9.

11. A computer program comprising instructions which, when the program is executed by a computer, cause the computer to carry out the method according to any of claims 1 to 9.

12. A computer-readable medium comprising instructions which, when executed by a computer, cause the computer to carry out the method according to any of claims 1 to 9.

## Patentansprüche

1. Verfahren zur Zeitvalidierung in einem Fahrzeug (1), wobei das Verfahren umfasst:
Empfangen einer ersten Positionsinformation an einer Empfangseinheit (21, 22) des Fahrzeugs (1), wobei die empfangene erste Positionsinformation eine erste Zeitinformation umfasst,
Bereitstellen eines ersten Zeitstempels zu der empfangenen ersten Positionsinformation basierend auf einer Fahrzeugzeit zum Zeitpunkt des Empfangens der ersten Positionsinformation,
Empfangen einer zweiten Positionsinformation an der Empfangseinheit (21, 22) des Fahrzeugs (1), wobei die empfangene zweite Positionsinformation eine zweite Zeitinformation umfasst,
Bereitstellen eines zweiten Zeitstempels zu der empfangenen zweiten Positionsinformation basierend auf der Fahrzeugzeit zum Zeitpunkt des Empfangens der zweiten Positionsinformation, wobei das Verfahren **gekennzeichnet ist durch**:
Bestimmen, ob ein Unterschied zwischen der ersten und der zweiten Zeitinformation und ein Unterschied zwischen dem ersten und dem zweiten Zeitstempel gleich sind und/oder ob eine Abweichung zwischen den beiden Unterschieden unter einem vordefinierten Schwellenwert liegt.

2. Verfahren nach Anspruch 1, wobei die Empfangseinheit (21, 22) den ersten Zeitstempel zu der empfangenen ersten Positionsinformation und/oder den zweiten Zeitstempel zu der empfangenen zweiten Positionsinformation bereitstellt.

3. Verfahren nach Anspruch 1 oder 2, wobei die Empfangseinheit (21, 22) mit einer Steuereinheit (4) des Fahrzeugs (1) verbunden ist, wobei das Verfahren weiter umfasst:
Senden der ersten und der zweiten Zeitinformation sowie des ersten und des zweiten Zeitstempels von der Empfangseinheit (21, 22) an die Steuereinheit (4), und
Bestimmen, ob der Unterschied zwischen der ersten und der zweiten Zeitinformation und der Unterschied zwischen dem ersten und dem zweiten Zeitstempel gleich sind und/oder ob die Abweichung zwischen den beiden Unterschieden unter dem vordefinierten Schwellenwert an der Steuereinheit (4) liegt.

4. Verfahren nach Anspruch 3, wobei die Steuereinheit (4) ein höheres Sicherheitsniveau für Fahrzeuge aufweist als die Empfangseinheit (21, 22).

5. Verfahren nach einem der Ansprüche 1 bis 4, wobei das Verfahren weiter ein Synchronisieren einer lokalen Zeit der Empfangseinheit (21, 22) mit der Fahrzeugzeit umfasst.

6. Verfahren nach Anspruch 5, sofern es von einem der Ansprüche 2 bis 4 abhängig ist, wobei die Empfangseinheit (21, 22) den ersten Zeitstempel zu der empfangenen ersten Positionsinformation und/oder den zweiten Zeitstempel zu der empfangenen zweiten Positionsinformation auf der Grundlage ihrer synchronisierten Ortszeit bereitstellt.

7. Verfahren nach einem der Ansprüche 1 bis 6, wobei die erste Positionsinformation von einem ersten globalen Navigationssatellitensystem (31) empfangen wird und die zweite Positionsinformation von einem zweiten globalen Navigationssatellitensystem (32) empfangen wird, wobei sich das erste und das zweite globale Navigationssatellitensystem (31, 32) voneinander unterscheiden.

8. Verfahren nach einem der Ansprüche 1 bis 6, wobei die erste und die zweite Positionsinformation von einem globalen Navigationssatellitensystem (31, 32) empfangen werden.

9. Verfahren nach einem der Ansprüche 1 bis 8, wobei das Fahrzeug (1) ein automatisiertes Fahrzeug ist und wobei das Verfahren weiter umfasst, eine automatisierte Fahrfunktion des Fahrzeugs (1) basierend auf der empfangenen ersten und/oder zweiten Positionsinformation nur dann zu steuern, wenn die Differenz zwischen der ersten und der zweiten Zeitinformation und die Differenz zwischen dem ersten und dem zweiten Zeitstempel gleich sind und/oder wenn die Abweichung zwischen den beiden Unterschieden unter dem vordefinierten Schwellenwert liegt.

10. Datenverarbeitungssystem (5), das Mittel zur Durchführung des Verfahrens nach einem der Ansprüche 1 bis 9 umfasst.

11. Computerprogramm, das Befehle umfasst, die, wenn das Programm von einem Computer ausgeführt wird, den Computer veranlassen, das Verfahren nach einem der Ansprüche 1 bis 9 auszuführen.

12. Computerlesbares Medium, das Befehle umfasst, die, wenn sie von einem Computer ausgeführt werden, den Computer veranlassen, das Verfahren nach einem der Ansprüche 1 bis 9 auszuführen.

## Revendications

1. Procédé de validation de l'heure dans un véhicule (1), le procédé comprenant les étapes suivantes :
recevoir une première information de position au niveau d'une unité de réception (21, 22) du véhicule (1), la première information de position reçue comprenant une première information temporelle,
fournir un premier horodatage à la première information de position reçue sur la base de l'heure du véhicule au moment de la réception des premières informations de position,
recevoir une deuxième information de position au niveau de l'unité de réception (21, 22) du véhicule (1), la deuxième information de position reçue comprenant une deuxième information temporelle,
fournir un second horodatage à la deuxième information de position reçue sur la base de l'heure du véhicule au moment de la réception des secondes informations de position, le procédé étant **caractérisé par** :
déterminer si une différence entre la première et la deuxième information temporelle et une différence entre la première et la deuxième horodatage temporelle sont identiques et/ou si un écart entre les deux différences est inférieur à un seuil prédéfini.

2. Procédé selon la revendication 1, dans lequel l'unité de réception (21, 22) fournit le premier horodatage à la première information de position reçue et/ou le second horodatage à la deuxième information de position reçue.

3. Procédé selon les revendications 1 ou 2, dans lequel l'unité de réception (21, 22) est connectée à une unité de commande (4) du véhicule (1), le procédé comprenant en outre :
envoyer la première et la deuxième information temporelle et le premier et le deuxième horodatage de l'unité de réception (21, 22) à l'unité de commande (4), et
déterminer si la différence entre la première et la deuxième information temporelle et la différence entre la première et la deuxième horodatage temporelle sont identiques et/ou si l'écart entre les deux différences est inférieur au seuil prédéfini au niveau de l'unité de commande (4).

4. Procédé selon la revendication 3, dans lequel l'unité de commande (4) présente un niveau de sécurité automobile supérieur à celui de l'unité de réception (21, 22).

5. Procédé selon l'une des revendications 1 à 4, le procédé comprenant en outre synchroniser l'heure locale de l'unité de réception (21, 22) avec l'heure du véhicule.

6. Procédé selon la revendication 5, lorsqu'il dépend de l'une des revendications 2 à 4, dans lequel l'unité de réception (21, 22) fournit le premier horodatage à la première information de position reçue et/ou le second horodatage à la deuxième information de position reçue sur la base de son heure locale synchronisée.

7. Procédé selon l'une des revendications 1 à 6, dans lequel la première information de position est reçue d'un premier système mondial de navigation par satellite (31) et la deuxième information de position est reçue d'un second système mondial de navigation par satellite (32), le premier et le second système mondial de navigation par satellite (31, 32) étant différents l'un de l'autre.

8. Procédé selon l'une des revendications 1 à 6, dans lequel la première et la deuxième information de position sont reçues d'un système mondial de navigation par satellite (31, 32).

9. Procédé selon l'une des revendications 1 à 8, dans lequel le véhicule (1) est un véhicule automatisé et dans lequel le procédé comprend en outre commander une fonction de conduite automatisée du véhicule (1) sur la base de la première et/ou la deuxième information de position reçue uniquement lorsque la différence entre la première et la deuxième information temporelle et la différence entre le premier et le second horodatage sont identiques et/ou si l'écart entre les deux différences est inférieur au seuil prédéfini.

10. Système de traitement de données (5) comprenant des moyens permettant de mettre en oeuvre le procédé selon l'une des revendications 1 à 9.

11. Programme informatique comprenant des instructions qui, lorsque le programme est exécuté par un ordinateur, amènent celui-ci à exécuter le procédé selon l'une des revendications 1 à 9.

12. Support lisible par ordinateur comprenant des instructions qui, lorsqu'elles sont exécutées par un ordinateur, amènent l'ordinateur à exécuter le procédé selon l'une des revendications 1 à 9.
